# EUROPÄISCHE PATENTANMELDUNG

(11) **EP 4 413 841 A1**
(43) Veröffentlichungstag der Anmeldung: **14.08.2024**
(21) Anmeldenummer: 24151224.3
(22) Anmeldetag: 10.01.2024
(51) Int. Cl.: A01C 7/04, A01C 19/02

(54) **DOSIEREINHEIT FÜR EINE SÄMASCHINE**

(30) Priorität: 10.02.2023 FR 2301245
(71) Anmelder: Ribouleau Monosem, 79240 Largeasse (FR)
(72) Erfinder: Gael, Jarry, Mannheim (DE)
(74) Vertreter: Holst, Sönke

(57) **Zusammenfassung**

Eine Dosiereinheit (24) für eine Sämaschine, mit einer Saatgutscheibe (38), die durch einen Antrieb (88) um ihre Achse in Drehung versetzbar ist und eine in ihrer Umfangsrichtung verteilte Anzahl an Öffnungen (50) zur Aufnahme von Saatgut umfasst, wobei die Saatgutscheibe (38) durch einen Halterungszusammenbau (46) mit einer Welle (54) des Antriebs (88) lösbar verbindbar oder verbunden ist und der Halterungszusammenbau (46) eine rückwärtige Anlagefläche (58) für die Saatgutscheibe (38), einen mittigen Abschnitt (56) und ein separates, mit Nocken (76) ausgestattetes Verrastungselement (62) umfasst, welches gegenüber dem mittigen Abschnitt (56) drehbar ist und die Saatgutscheibe (38) eine zum mittigen Abschnitt (56) komplementäre, mittige Öffnung und von dieser ausgehende, zu den Nocken (76) komplementäre Aussparungen (74) umfasst, sodass das Verrastungselement (62) zwischen einer ersten Drehstellung, in welcher die Nocken (76) des Verrastungselements (62) an der Saatgutscheibe (38) anliegen und die Saatgutscheibe (38) zwischen sich und der rückwärtigen Anlagefläche (58) einklemmen, und in einer zweiten Drehstellung beweglich ist, in welcher die Nocken (76) des Verrastungselements (62) mit den Aussparungen (74) der Saatgutscheibe (38) ausgerichtet sind und die Saatgutscheibe (38) abnehmbar ist, wobei das Verrastungselement (62) durch eine formschlüssige Verbindung am mittigen Abschnitt (56) arretierbar ist.

## Beschreibung

Die vorliegende Erfindung betrifft eine Dosiereinheit für eine Sämaschine, mit einer Saatgutscheibe, die durch einen Antrieb um ihre Achse in Drehung versetzbar ist und eine in ihrer Umfangsrichtung verteilte Anzahl an Öffnungen zur Aufnahme von Saatgut umfasst, wobei die Saatgutscheibe durch einen Halterungszusammenbau mit einer Welle des Antriebs lösbar verbindbar oder verbunden ist und der Halterungszusammenbau eine rückwärtige Anlagefläche für die Saatgutscheibe, einen mittigen Abschnitt und ein separates, mit Nocken ausgestattetes Verrastungselement umfasst, welches gegenüber dem mittigen Abschnitt drehbar ist und die Saatgutscheibe eine zum mittigen Abschnitt komplementäre, mittige Öffnung und von dieser ausgehende, zu den Nocken komplementäre Aussparungen umfasst, sodass das Verrastungselement zwischen einer ersten Drehstellung, in welcher die Nocken des Verrastungselements an der Saatgutscheibe anliegen und die Saatgutscheibe zwischen sich und der rückwärtigen Anlagefläche einklemmen, und in einer zweiten Drehstellung beweglich ist, in welcher die Nocken des Verrastungselements mit den Aussparungen der Saatgutscheibe ausgerichtet sind und die Saatgutscheibe abnehmbar ist.

### Stand der Technik

Im Stand der Technik sind Sämaschinen, die einzelne Körner in eine geöffnete Furche abgegeben können, mit Dosiereinheiten ausgestattet, die jeweils eine Saatgutscheibe umfassen. Die Saatgutscheiben, die auch als Säscheiben, Vereinzelungsscheiben oder Dosierscheiben bezeichnet werden, sind mit einem Drehantrieb verbunden und umfassen Aussparungen, in denen einzelne Körner des Saatguts aufgenommen werden. Die aufgenommenen Körner werden durch Unterdruck in den Aussparungen gehalten, aufgrund der Rotation der Saatgutscheibe über einen gewissen Winkel transportiert und dann wieder abgegeben, damit sie in die Furche gelangen können.

Die Saatgutscheiben sind üblicherweise von der Welle des Drehantriebs lösbar, um sie bei Bedarf, nach Öffnen einer Abdeckung, gegen eine andere Saatgutscheibe austauschen zu können, die andere Abstände und/oder Abmessungen der Aussparungen aufweisen kann.

Im Stand der Technik wird hierzu bei seitens der Anmelderin hergestellten Sämaschinen (vgl. Prospekt "Valoterra, der Neue Maßstab für Präzision" der Fa. Monosem, Druckvermerk 92800DE, Seite 7) eine mit einer Welle des Drehantriebs gekoppelte Halterung verwendet, die eine rückwärtige Anlagefläche für die Saatgutscheibe und einen mittigen Abschnitt mit um dessen Umfang verteilten Nocken aufweist, welche in komplementäre Aussparungen in der Saatgutscheibe eingreifen. Dadurch wird die Saatgutscheibe in Drehrichtung an der Halterung fixiert. In axialer Richtung der Welle erfolgt die Fixierung der Saatgutscheibe durch ein separates Verrastungselement, das gegenüber der Halterung um deren mittigen Abschnitt und somit um die Achse der Welle drehbar angeordnet und ebenfalls mit Nocken ausgestattet ist, deren Abmessungen in Umfangsrichtung und axialer Richtung zumindest etwa jenen der Nocken der Halterung entsprechen. In einer ersten Drehstellung liegen die Nocken des Verrastungselements an der Saatgutscheibe an und halten sie an der Halterung fest, indem sie die Saatgutscheibe zwischen sich und der rückwärtigen Anlagefläche einklemmen, und in einer zweiten Drehstellung sind die Nocken des Verrastungselements mit den Nocken der Halterung ausgerichtet. Somit ist die Saatgutscheibe in der ersten Drehstellung arretiert und in der zweiten Drehstellung von der Halterung abnehmbar. Die axiale Fixierung des Verrastungselements, insbesondere in der ersten Drehstellung, erfolgt durch Federkraft, indem eine Feder das Verrastungselement gegenüber dem mittigen Abschnitt der Halterung axial in Richtung auf die Halterung hin vorspannt. Der Bediener kann somit das Verrastungselement bei Bedarf gegen die Kraft der Feder von der Saatgutscheibe abziehen und zwischen den beiden Drehstellungen bewegen.

Eine ähnliche Anbringung einer Saatgutscheibe an ihrer Welle mittels eines drehbaren Handgriffs, der über eine korrespondierende Öffnung in der Saatgutscheibe gesteckt und dann gedreht wird, um die Saatgutscheibe zu arretieren, wird in der EP 0 140 699 A2 beschrieben. Dort bewegt sich der Handgriff entlang einer Rampe und klemmt die Saatgutscheibe mit zunehmender Kraft ein, bis er in eine Vertiefung in der Rampe gelangt, in welche er durch Federkraft gezogen wird, um ihn dort zu arretieren. Durch Herausziehen des Handgriffs aus der Vertiefung kann er wieder in Gegenrichtung gedreht werden, um die Saatgutscheibe abzunehmen.

Der Vollständigkeit halber seien noch die US 3 982 670 A , EP 0 141 639 A2 und EP 1 920 647 A1 erwähnt, in denen lösbare Verbindungen zwischen einer mit der Saatgutscheibe verbundenen Welle und deren Antrieb beschrieben werden.

### Aufgabe

Die im Prospekt "Valoterra" und in der EP 0 140 699 A2 gezeigte, abnehmbare Anbringung der Saatgutscheibe ermöglicht einem Bediener eine relativ einfache und schnelle Auswechslung der Saatgutscheibe. Die durch Federkraft erfolgende, kraftschlüssige axiale Befestigung der Saatgutscheibe durch das Halteelement hat sich jedoch nicht in allen Fällen als zuverlässig erwiesen, da sich die Seite der Saatgutscheibe, auf der sich das Halteelement befindet, mit einem Unterdruck beaufschlagt wird, der gegen die Haltekraft der Feder wirkt und gelegentlich dazu führt, dass sich das Halteelement von der Saatgutscheibe löst und die Funktion der Dosiereinheit nicht mehr gewährleistet ist.

Die vorliegende Erfindung hat sich die Aufgabe gestellt, dieses Problem zu vermeiden oder zumindest zu vermindern.

### Lösung

Die vorliegende Erfindung wird durch die Ansprüche definiert.

Eine Dosiereinheit für eine Sämaschine ist mit einer Saatgutscheibe versehen, die durch einen Antrieb um ihre Achse in Drehung versetzbar ist und eine in ihrer Umfangsrichtung verteilte Anzahl an Öffnungen zur Aufnahme von Saatgut umfasst. Die Saatgutscheibe ist durch einen Halterungszusammenbau mit einer Welle des Antriebs lösbar verbindbar oder verbunden. Der Halterungszusammenbau umfasst eine rückwärtige Anlagefläche für die Saatgutscheibe, einen mittigen Abschnitt und ein separates, mit Nocken ausgestattetes Verrastungselement, welches gegenüber dem mittigen Abschnitt drehbar ist. Die Saatgutscheibe weist eine zum mittigen Abschnitt komplementäre, mittige Öffnung und von dieser ausgehende, zu den Nocken komplementäre Aussparungen auf, sodass das Verrastungselement zwischen einer ersten Drehstellung, in welcher die Nocken des Verrastungselements an der Saatgutscheibe anliegen und die Saatgutscheibe zwischen sich und der rückwärtigen Anlagefläche einklemmen, und in einer zweiten Drehstellung beweglich ist, in welcher die Nocken des Verrastungselements mit den Aussparungen der Saatgutscheibe ausgerichtet sind und die Saatgutscheibe abnehmbar ist. Das Verrastungselement ist durch eine formschlüssige Verbindung am mittigen Abschnitt arretierbar.

Mit anderen Worten wird das Verrastungselement und somit auch die Saatgutscheibe durch die Form mechanisch zusammenwirkender Elemente am mittigen Abschnitt festgelegt, d.h. formschlüssig fixiert. Das vermeidet die mit der federbasierten Fixierung behafteten, eingangs erwähnten Nachteile.

Die formschlüssige Verbindung kann ein mit dem mittigen Abschnitt gekoppeltes Klemmelement umfassen, das zwischen einer ersten Schwenkstellung, in welcher es das Verrastungselement gegen die Saatgutscheibe drückt, und einer zweiten, gelösten Schwenkstellung beweglich ist.

Das Klemmelement kann um eine sich radial zur Drehachse der Saatgutscheibe und der Welle verlaufende Achse zwischen der ersten und zweiten Schwenkstellung schwenkbar sein.

Das Klemmelement kann so geformt sein, dass der in Anlage am Verrastungselement kommende Bereich des Klemmelements in einer zwischen der ersten und zweiten Schwenkstellung liegenden Mittelstellung näher an der Saatgutscheibe liegt als in der ersten Schwenkstellung.

Das Klemmelement kann bogenförmig ausgeführt und mit an beiden Enden schwenkbar angelenkt sein, während der in Anlage am Verrastungselement kommende Bereich des Klemmelements sich benachbart zu den Enden befindet und der bodenförmige Bereich als Griff verwendbar ist.

Insbesondere kann die Schwenkachse des Verrastungselements die Drehachse der Saatgutscheibe schneiden und der mit dem Verrastungselement in Anlage kommende Bereich des Klemmelements) sich auch auf die vom bodenförmigen Bereich beabstandete Seite der Schwenkachse erstrecken.

Das Klemmelement kann schwenkbar an einem Halteelement angelenkt sein, das mit dem mittigen Abschnitt in axialer Richtung unverschieblich gekoppelt ist.

Das Verrastungselement und/oder das Halteelement kann auf einen mit dem mittigen Abschnitt fest verbundenen, ersten oder zweiten zylindrischen Abschnitt aufgesteckt sein.

Um den Umfang des mittigen Abschnitts können Nocken verteilt sein, welche zu den Aussparungen der Saatgutscheibe komplementär und konfiguriert sind, in die Aussparungen der Saatgutscheibe einzugreifen.

Eine oder mehrere oder alle Reiheneinheiten einer Sämaschine kann oder können mit einer erfindungsgemäßen Dosiereinheit bestückt sein.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer Reiheneinheit einer Sämaschine,
- Fig. 2: eine perspektivische Ansicht der Dosiereinheit der Reiheneinheit mit abgenommener Abdeckung,
- Fig. 3: eine perspektivische Ansicht der Halterung der Dosierscheibe der Reiheneinheit,
- Fig. 4: eine Ansicht nach Figur 3 als Explosionszeichnung,
- Fig. 5: einen Querschnitt durch den Halterungszusammenbau bei fixiertem Klemmelement, und
- Fig. 6: einen Querschnitt durch den Halterungszusammenbau bei gelöstem Klemmelement.

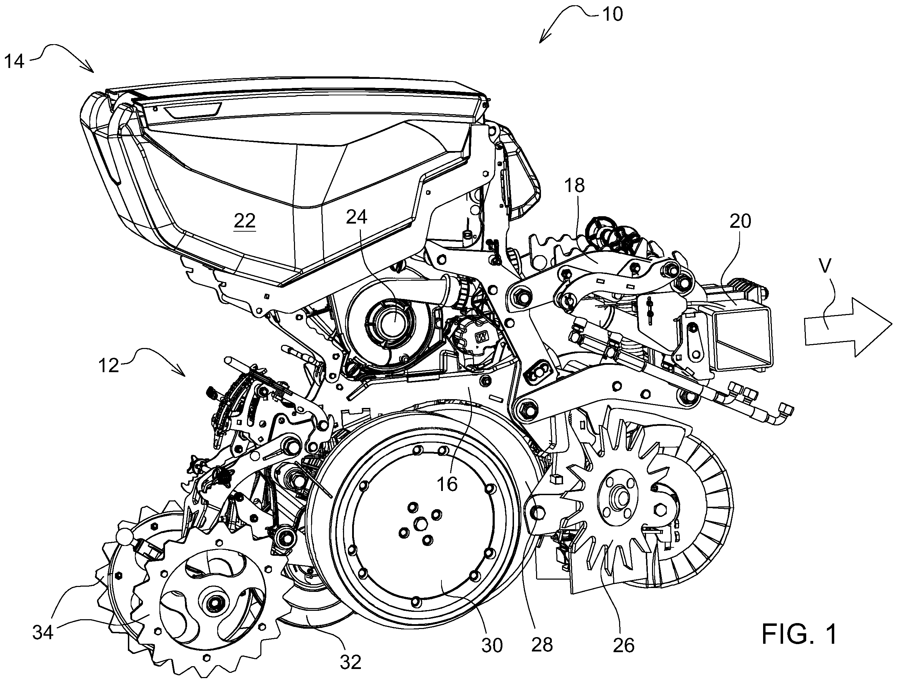

Die Figur 1 zeigt eine Reiheneinheit 12 für eine Sämaschine 10 in einer seitlichen Ansicht. Die Reiheneinheit 12 umfasst eine Säeinheit 14 mit einem Tragrahmen 16, der durch eine Parallelogrammaufhängung 18 höhenverstellbar und bodenkonturfolgend an einem Querträger 20 angebracht ist. Der Querträger 20, an dem weitere, hier aus Gründen der Übersichtlichkeit nicht gezeigte Reiheneinheiten 12 seitlich nebeneinander befestigt sind, kann an einem Fahrgestell oder an einer Schnittstelle eines Ackerschleppers (nicht gezeigt) befestigt werden und wird im Betrieb in einer Vorwärtsrichtung V über ein Feld bewegt, um dort Saatgut auszubringen. Am Tragrahmen 16 sind ein Saatgutbehälter 22, eine Dosiereinheit 24 für Saatgut, ein Reihenräumer 26, ein Furchenöffner 28, ein die Furchentiefe vorgebendes Tiefeneinstellrad 30, ein Andrückrad 32 zum Andrücken des von der Dosiereinheit 24 in die vom Furchenöffner 28 erzeugte Furche abgelegten Saatguts und ein Schließradpaar 34 angeordnet, das die Furche letztlich wieder schließt.

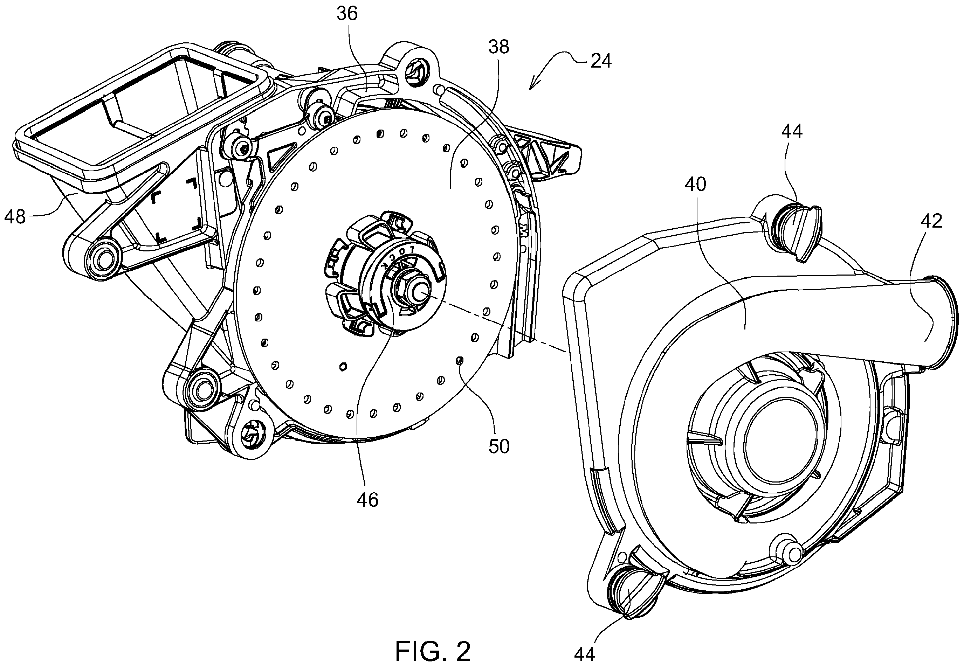

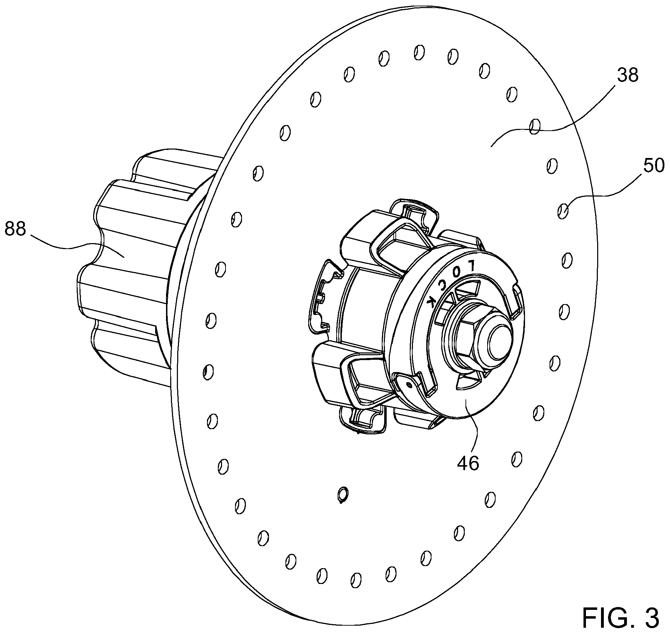

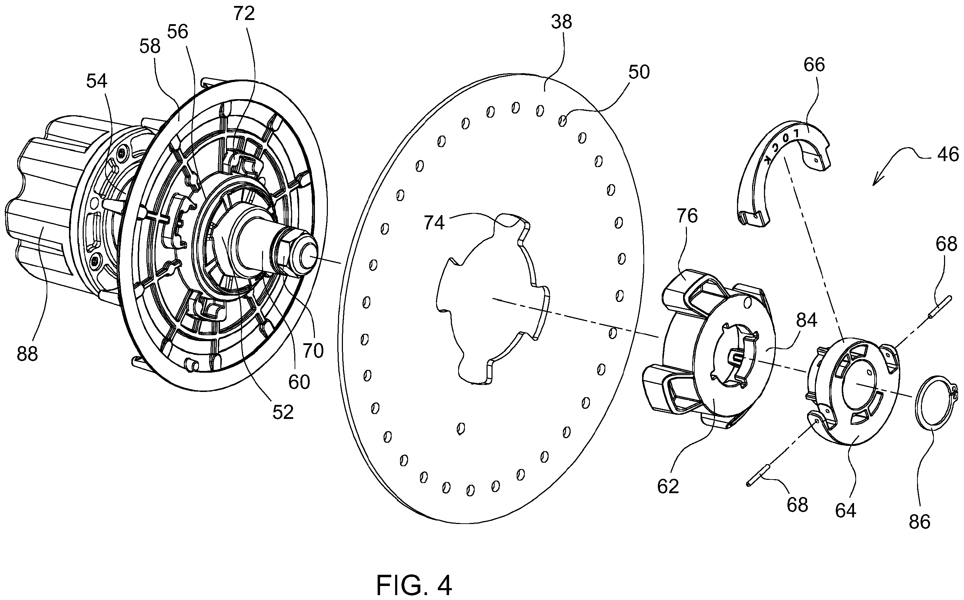

Die Figur 2 zeigt die Dosiereinheit 24 vergrößert und in einer geöffneten Stellung. Die Dosiereinheit 24 umfasst ein erstes Gehäuseteil 36, in welchem eine Saatgutscheibe 38 angeordnet ist. Ein zweites Gehäuseteil 40 der Dosiereinheit 24 ist in einer vom ersten Gehäuseteil 36 abgebauten Stellung gezeigt und durch Verschlusselemente 44 am ersten Gehäuseteil 36 befestigbar. Das zweite Gehäuseteil 40 umfasst einen Stutzen 42, der mit einer Pumpe verbunden wird, die im Betrieb einen Unterdruck innerhalb des zweiten Gehäuseteils 40 bereitstellt. Dieser Unterdruck dient dazu, der Dosiereinheit 24 durch einen vom Saatgutbehälter 22 mit Saatgut oder aus einem zentralen Saatgutbehälter der Sämaschine (nicht gezeigt) befüllten Schacht 48 zugeführtes Saatgut einzeln (körnerweise) an Öffnungen 50 in der durch einen Antrieb 88 (vgl. Figuren 3 und 4) rotativ angetriebenen Saatgutscheibe 38 anzusaugen, bis es durch ein Saatgutrohr (nicht gezeigt) in die Furche abgegeben wird. Eine mögliche Ausführungsform einer Dosiereinheit wird in der EP 2 810 546 A1 gezeigt, deren Offenbarung durch Verweis mit in die vorliegenden Unterlagen aufgenommen wird. Die in der Figur 2 rechts gezeigte Seite der Saatgutscheibe 38 befindet sich somit in einem Bereich mit Unterdruck (so genanntem Vakuum). Der Antrieb 88 kann einen Elektromotor enthalten oder einen anderen Antriebsstrang verwenden.

Die Befestigung der Saatgutscheibe 38 erfolgt durch einen lösbaren Halterungszusammenbau 46, der anhand der Figuren 3 und 4 näher beschrieben wird. Während die Figur 3 die Saatgutscheibe 38 im befestigten Zustand zeigt, ist sie in der Figur 4 demontiert.

Der Halterungszusammenbau 46 dient dazu, die Saatgutscheibe 38 lösbar mit einer Welle 54 des Antriebs 88 zu verbinden, der im Betrieb die Saatgutscheibe 38 um deren Symmetrieachse in Drehung zu versetzt, damit nacheinander unterschiedliche, um den Umfang der Saatgutscheibe 38 verteilte Öffnungen 50 mit einzelnen Partikeln des Saatguts beaufschlagt werden und es später in die Furche abgeben.

Der Halterungszusammenbau 46 umfasst einen mittigen Abschnitt 56, der mit der Welle 54 drehfest verbunden ist. Der mittige Abschnitt 56 ist in sich zylindrisch und hat einen geringfügig kleineren Durchmesser als eine mittige Öffnung in der Saatgutscheibe 38, die im montierten Zustand den mittigen Abschnitt 56 umrundet. Zudem umfasst der mittige Abschnitt 56 eine Anzahl an Nocken 72, von denen in der dargestellten Ausführungsform vier gezeigt und um den Umfang des mittigen Abschnitts 56 gleichförmig verteilt sind. Die Saatgutscheibe 38 umfasst dazu komplementäre Aussparungen 74, welche die Nocken 72 in sich aufnehmen. Dadurch ist die Drehstellung der Saatgutscheibe 38 gegenüber dem mittigen Abschnitt 56 definiert. Durch die Form, Positionierung und ggf. Anzahl der Nocken 72 und Aussparungen 74 kann die Anzahl möglicher Orientierungen der Saatgutscheibe 38 gegenüber dem Halterungszusammenbau 46 begrenzt werden, ggf. auf eine einzige mögliche Orientierung, oder wie hier, auf vier mögliche Orientierungen. In axialer Richtung wird die Saatgutscheibe 38 (in Figur 4 nach links) durch eine Anlagefläche 58 begrenzt, die mit dem mittigen Abschnitt 56 insbesondere starr verbunden ist und sich radial nach außen erstreckt.

Weiterhin schließen sich an den mittigen Abschnitt 56 in axialer Richtung, vom Antrieb 88 hinfort gerichtet, ein erster zylindrischer Abschnitt 52 und ein zweiter zylindrischer Abschnitt 60 an, die jeweils kleinere Durchmesser als der mittige Abschnitt 56 aufweisen und damit fest verbunden sind, wobei der Durchmesser des zweiten zylindrischen Abschnitts 60 noch kleiner als jener des ersten zylindrischen Abschnitts 52 ist. Die Abschnitte 52 und 60 können mit dem mittigen Abschnitt 56 einteilig hergestellt sein, z.B. als Gussteil, oder damit fest verbunden werden, z.B. als Schweißzusammenbau. Auf den ersten und zweiten zylindrischen Abschnitt 52 und 60 wird im zusammengebauten Zustand des Halterungszusammenbaus 46 ein Verrastungselement 62 aufgeschoben, das einen zylindrischen Körper mit einer mittigen, nahezu spielfrei auf die Abschnitte 52 und 60 passenden Öffnung aufweist. Um den äußeren Umfang des Körpers des Verrastungselements 62 sind vier Nocken 76 verteilt, deren Form und Abmessungen in radialer und Umfangsrichtung in etwa den Nocken 72 des mittigen Abschnitts 56 entsprechen. Die Aussparungen 74 der Saatgutscheibe 38 sind zu den Nocken 76 des Verrastungselements 62 komplementär und der Durchmesser des Körpers des Verrastungselements 62 ist etwas kleiner als jener der mittigen Öffnung der Saatgutscheibe 38, sodass die Saatgutscheibe 38 über das Verrastungselement 62 bewegt werden kann, wenn die Nocken 76 und die Aussparungen 74 untereinander ausgerichtet sind.

Das Verrastungselement 62 ist gegenüber dem mittigen Abschnitt 56 um die Symmetrieachse (Drehachse der Welle 54 sowie der Saatgutscheibe 38 und des Halterungszusammenbaus 46) frei drehbar, solange es nicht arretiert wird (wie weiter unten beschrieben). Es kann eine unbegrenzte Drehung (um 360° und mehr) vorgesehen sein, oder der Drehwinkel wird auf einen kleineren Wert eingeschränkt, wozu entsprechende Merkmale am Verrastungselement 62 und an den zylindrischen Abschnitten 52 und/oder 60 vorgesehen sein können.

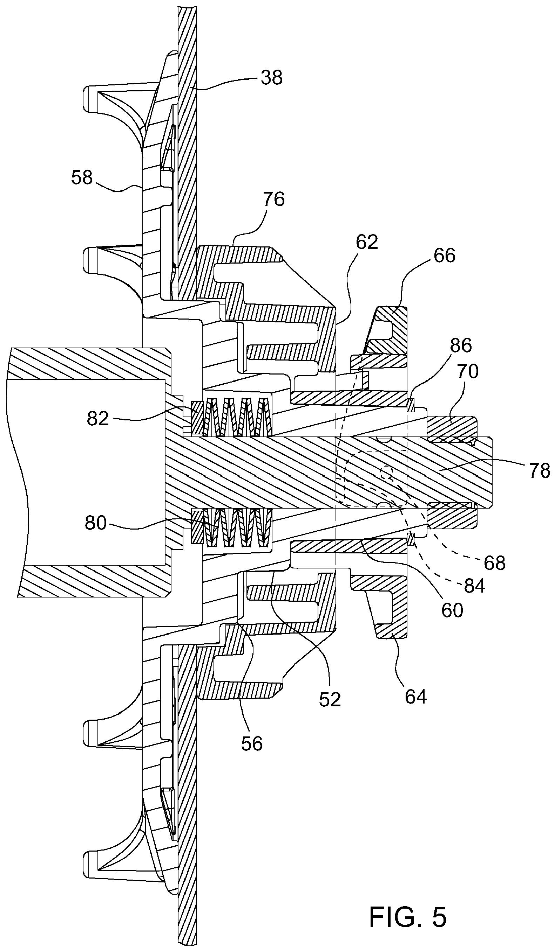

Um das Verrastungselement 62 (und letztlich auch die Saatgutscheibe 38) in axialer Richtung mit dem mittigen Abschnitt 56 zu koppeln, sind ein Halteelement 64 und ein Klemmelement 66 vorgesehen. Das Halteelement 64 wird mit seiner mittigen Öffnung auf den zweiten zylindrischen Abschnitt 60 aufgesteckt und dort zumindest in axialer Richtung (z.B. durch einen Klemmring 86, vgl. Figur 5) oder auch in Umfangsrichtung (z.B. durch einen radial durch den zweiten zylindrischen Abschnitt 60 und das Halteelement 64 verlaufenden Stift) fixiert. Das Verrastungselement 62 wird demnach sandwichartig zwischen dem Halteelement 64 und dem mittigen Abschnitt 56 und/oder der Saatgutscheibe 38 positioniert, bleibt jedoch um ein relativ kleines Spiel in axialer Richtung beweglich (solange das Klemmelement 66 nicht wirksam ist). Das Halteelement 64 ist jedoch zumindest in axialer Richtung starr mit dem mittigen Abschnitt 56 gekoppelt, wie erwähnt.

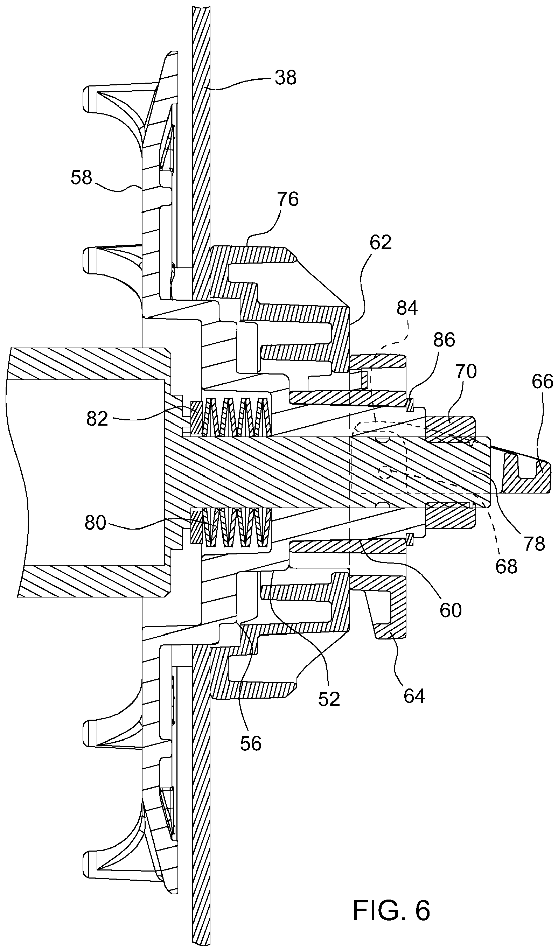

Das Klemmelement 66 ist seinerseits um eine sich in radialer Richtung (bezüglich der Drehachse der Welle 54 sowie der Saatgutscheibe 38 und des Halterungszusammenbaus 46) erstreckende Schwenkachse, die durch zwei Stifte 68 definiert wird, die das bogenförmige und als Handgriff für einen Bediener dienende Klemmelement 66 an seinen beiden Enden am Halteelement 64 schwenkbar haltern und sich radial durch das Klemmelement 66 und das Halteelement 64 erstrecken, beweglich. Das Klemmelement kann in eine Klemmstellung gebracht werden, wie sie in der Figur 4 gezeigt ist, oder um 90° um seine Schwenkachse geschwenkt werden, in den Figuren 3 und 4 nach rechts, wie auch in der Figur 6 gezeigt wird.

Das Klemmelement 66 ist mit seinen beiden Enden durch die Stifte 68 schwenkbar am Halteelement 64 gelagert und kann in seiner ersten Schwenkstellung, in der das Klemmelement 66 sich quer zur Achse der Saatgutscheibe 38 erstreckt, mit seinen endseitigen, der Schwenkachse benachbarten Bereichen in Anlage mit dem Verrastungselement 62 gebracht werden, wie in der Figur 5 dargestellt ist. In dieser Position drückt es das Verrastungselement 62 gegen die Saatgutscheibe 38 und fixiert sie dort. Das Klemmelement 66 umfasst den zur Anlage an das Verrastungselement 62 kommenden Bereich 84. Dieser Bereich 84 ist derart angeordnet, dass er beim Schwenken des Klemmelements 66 um die Stifte 68 eine Kreisbewegung durchführt, die beim Bewegen des Klemmelements 66 aus der in Figur 5 gezeigten, ersten Schwenkstellung um etwa 90° in die in Figur 6 gezeigte, zweite (gelöste) Klemmstellung zunächst die Klemmwirkung erhöht, da sich der Bereich 84 auf beiden Seiten der Stifte 68 und somit auch auf der vom bogenförmigen Bereich des Klemmelements 66 beabstandeten Seite der Schwenkachse befindet, und dann erst wieder vermindert. Dadurch ist das Klemmelement 66 in der ersten Stellung zwangsweise arretiert (so genannter over-center-Mechanismus). Die besagte Bewegung wird durch eine gewisse Elastizität des Materials des Klemmelements 66 ermöglicht, ggf. auch des Materials des Verrastungselements 62 und/oder des Halteelements 64, die beispielsweise aus Kunststoff hergestellt sein können. Alternativ oder zusätzlich könnte hierfür eine Feder bereitgestellt werden, z.B. zwischen dem Verrastungselement 62 und der Saatgutscheibe 38.

Anhand der Figuren 5 und 6 ist weiterhin erkennbar, dass sich ein Abschnitt 78 der Welle 54 axial durch den Halterungszusammenbau 46 erstreckt und am äußeren Ende des zweiten Abschnitts 60 durch eine Mutter 70 fixiert ist. Eine Feder 80 ist zwischen einer mit der Welle 54 gekoppelten Scheibe 82 und einer innenseitigen Schulter, die am Übergang zwischen den ersten und zweiten zylindrischen Abschnitt 52, 60 angeordnet ist, angebracht. Die Mutter 70 zieht demnach die Feder 80 gegen ihre Vorspannung zusammen und die Feder 80 erlaubt eine gewisse axiale Bewegung der Saatgutscheibe 38 gegenüber dem Gehäuse 36, 40, an dem sich auch der Antrieb 88 abstützt.

Nach alledem ergibt sich folgender Funktion. Bei arretiertem, in der ersten Stellung befindlichem Klemmelement 66 drücken die Nocken 76 des Verrastungselements 62 die Saatgutscheibe 38 gegen die Anlagefläche 58, wie in den Figuren 3 und 5 gezeigt. Wird das Klemmelement 66 in die zweite Stellung gebracht, wie in Figur 6 gezeigt, entfällt die Klemmwirkung der Nocken 76 des Verrastungselements 62 und letzteres kann um dessen Achse gedreht werden. Die Nocken 76 können dadurch mit den Nocken 72 des mittigen Abschnitts 56 in Ausrichtung gebracht werden. Dann kann die Saatgutscheibe 38 abgenommen und eine andere Saatgutscheibe 38 kann in umgekehrter Reihenfolge der Schritte wieder angebracht werden.

Nach alldem erhält man eine formschlüssige Fixierung des Halterungszusammenbaus 46 bei in der ersten Stellung befindlichem Klemmelement 66, die auch bei der Positionierung des Halterungszusammenbaus 46 in einem Unterdruckbereich eine zuverlässige Fixierung ermöglicht, anders als bisher verwendete, auf Federkraft basierende Konstruktionen.

## Patentansprüche

1. Dosiereinheit (24) für eine Sämaschine (10), mit einer Saatgutscheibe (38), die durch einen Antrieb (88) um ihre Achse in Drehung versetzbar ist und eine in ihrer Umfangsrichtung verteilte Anzahl an Öffnungen (50) zur Aufnahme von Saatgut umfasst, wobei die Saatgutscheibe (38) durch einen Halterungszusammenbau (46) mit einer Welle (54) des Antriebs (88) lösbar verbindbar oder verbunden ist und der Halterungszusammenbau (46) eine rückwärtige Anlagefläche (58) für die Saatgutscheibe (38), einen mittigen Abschnitt (56) und ein separates, mit Nocken (76) ausgestattetes Verrastungselement (62) umfasst, welches gegenüber dem mittigen Abschnitt (56) drehbar ist und die Saatgutscheibe (38) eine zum mittigen Abschnitt (56) komplementäre, mittige Öffnung und von dieser ausgehende, zu den Nocken (76) komplementäre Aussparungen (74) umfasst, sodass das Verrastungselement (62) zwischen einer ersten Drehstellung, in welcher die Nocken (76) des Verrastungselements (62) an der Saatgutscheibe (38) anliegen und die Saatgutscheibe (38) zwischen sich und der rückwärtigen Anlagefläche (58) einklemmen, und in einer zweiten Drehstellung beweglich ist, in welcher die Nocken (76) des Verrastungselements (62) mit den Aussparungen (74) der Saatgutscheibe (38) ausgerichtet sind und die Saatgutscheibe (38) abnehmbar ist, **dadurch gekennzeichnet, dass** das Verrastungselement (62) durch eine formschlüssige Verbindung am mittigen Abschnitt (56) arretierbar ist.

2. Dosiereinheit (24) nach Anspruch 1, wobei die formschlüssige Verbindung ein mit dem mittigen Abschnitt (56) gekoppeltes Klemmelement (66) umfasst, das zwischen einer ersten Schwenkstellung, in welcher es das Verrastungselement (62) gegen die Saatgutscheibe (38) drückt, und einer zweiten, gelösten Schwenkstellung beweglich ist.

3. Dosiereinheit (24) nach Anspruch 2, wobei das Klemmelement (66) um eine sich radial zur Drehachse der Saatgutscheibe (38) und der Welle (54) verlaufende Achse zwischen der ersten und zweiten Schwenkstellung schwenkbar ist.

4. Dosiereinheit (24) nach Anspruch 3, wobei das Klemmelement (66) so geformt ist, dass der in Anlage am Verrastungselement (62) kommende Bereich (84) des Klemmelements (66) in einer zwischen der ersten und zweiten Schwenkstellung liegenden Mittelstellung näher an der Saatgutscheibe (38) liegt als in der ersten Schwenkstellung.

5. Dosiereinheit (24) nach Anspruch 4, wobei das Klemmelement (66) bogenförmig ausgeführt und an beiden Enden schwenkbar angelenkt ist und der in Anlage am Verrastungselement (62) kommende Bereich (84) des Klemmelements (66) sich benachbart zu den Enden befindet, während der bodenförmige Bereich als Griff verwendbar ist.

6. Dosiereinheit (24) nach Anspruch 5, wobei die Schwenkachse des Verrastungselements (62) die Drehachse der Saatgutscheibe (38) schneidet und der mit dem Verrastungselement (62) in Anlage kommende Bereich (84) des Klemmelements (66) sich auch auf die vom bodenförmigen Bereich beabstandete Seite der Schwenkachse erstreckt.

7. Dosiereinheit (24) nach einem der Ansprüche 2 bis 6, wobei das Klemmelement (66) schwenkbar an einem Halteelement (64) angelenkt ist, das mit dem mittigen Abschnitt (56) in axialer Richtung unverschieblich gekoppelt ist.

8. Dosiereinheit (24) nach Anspruch 7, wobei das Verrastungselement (62) und/oder das Halteelement (64) auf einen mit dem mittigen Abschnitt (56) fest verbundenen, ersten oder zweiten zylindrischen Abschnitt (52, 60) aufgesteckt sind.

9. Dosiereinheit (24) nach einem der Ansprüche 1 bis 8, wobei um den Umfang des mittigen Abschnitts (56) Nocken (72) verteilt sind, welche zu den Aussparungen (74) der Saatgutscheibe (38) komplementär und konfiguriert sind, in die Aussparungen (74) einzugreifen.

10. Reiheneinheit (12) für eine Sämaschine (10) mit einer Dosiereinheit (24) nach einem der vorhergehenden Ansprüche.

## Geänderte Patentansprüche

### Geänderte Patentansprüche gemäss Regel 137(2) EPÜ.

1. Dosiereinheit (24) für eine Sämaschine (10), mit einer Saatgutscheibe (38), die durch einen Antrieb (88) um ihre Achse in Drehung versetzbar ist und eine in ihrer Umfangsrichtung verteilte Anzahl an Öffnungen (50) zur Aufnahme von Saatgut umfasst, wobei die Saatgutscheibe (38) durch einen Halterungszusammenbau (46) mit einer Welle (54) des Antriebs (88) lösbar verbindbar oder verbunden ist und der Halterungszusammenbau (46) eine rückwärtige Anlagefläche (58) für die Saatgutscheibe (38), einen mittigen Abschnitt (56) und ein separates, mit Nocken (76) ausgestattetes Verrastungselement (62) umfasst, welches gegenüber dem mittigen Abschnitt (56) drehbar ist und die Saatgutscheibe (38) eine zum mittigen Abschnitt (56) komplementäre, mittige Öffnung und von dieser ausgehende, zu den Nocken (76) komplementäre Aussparungen (74) umfasst, sodass das Verrastungselement (62) zwischen einer ersten Drehstellung, in welcher die Nocken (76) des Verrastungselements (62) an der Saatgutscheibe (38) anliegen und die Saatgutscheibe (38) zwischen sich und der rückwärtigen Anlagefläche (58) einklemmen, und in einer zweiten Drehstellung beweglich ist, in welcher die Nocken (76) des Verrastungselements (62) mit den Aussparungen (74) der Saatgutscheibe (38) ausgerichtet sind und die Saatgutscheibe (38) abnehmbar ist, **dadurch gekennzeichnet, dass** das Verrastungselement (62) durch eine formschlüssige Verbindung am mittigen Abschnitt (56) arretierbar ist, und dass die formschlüssige Verbindung ein mit dem mittigen Abschnitt (56) gekoppeltes Klemmelement (66) umfasst, das zwischen einer ersten Schwenkstellung, in welcher es das Verrastungselement (62) gegen die Saatgutscheibe (38) drückt, und einer zweiten, gelösten Schwenkstellung beweglich ist.

2. Dosiereinheit (24) nach Anspruch 1, wobei das Klemmelement (66) um eine sich radial zur Drehachse der Saatgutscheibe (38) und der Welle (54) verlaufende Achse zwischen der ersten und zweiten Schwenkstellung schwenkbar ist.

3. Dosiereinheit (24) nach Anspruch 2, wobei das Klemmelement (66) so geformt ist, dass der in Anlage am Verrastungselement (62) kommende Bereich (84) des Klemmelements (66) in einer zwischen der ersten und zweiten Schwenkstellung liegenden Mittelstellung näher an der Saatgutscheibe (38) liegt als in der ersten Schwenkstellung.

4. Dosiereinheit (24) nach Anspruch 3, wobei das Klemmelement (66) bogenförmig ausgeführt und an beiden Enden schwenkbar angelenkt ist und der in Anlage am Verrastungselement (62) kommende Bereich (84) des Klemmelements (66) sich benachbart zu den Enden befindet, während der bodenförmige Bereich als Griff verwendbar ist.

5. Dosiereinheit (24) nach Anspruch 4, wobei die Schwenkachse des Verrastungselements (62) die Drehachse der Saatgutscheibe (38) schneidet und der mit dem Verrastungselement (62) in Anlage kommende Bereich (84) des Klemmelements (66) sich auch auf die vom bodenförmigen Bereich beabstandete Seite der Schwenkachse erstreckt.

6. Dosiereinheit (24) nach einem der Ansprüche 1 bis 5, wobei das Klemmelement (66) schwenkbar an einem Halteelement (64) angelenkt ist, das mit dem mittigen Abschnitt (56) in axialer Richtung unverschieblich gekoppelt ist.

7. Dosiereinheit (24) nach Anspruch 6, wobei das Verrastungselement (62) und/oder das Halteelement (64) auf einen mit dem mittigen Abschnitt (56) fest verbundenen, ersten oder zweiten zylindrischen Abschnitt (52, 60) aufgesteckt sind.

8. Dosiereinheit (24) nach einem der Ansprüche 1 bis 7, wobei um den Umfang des mittigen Abschnitts (56) Nocken (72) verteilt sind, welche zu den Aussparungen (74) der Saatgutscheibe (38) komplementär und konfiguriert sind, in die Aussparungen (74) einzugreifen.

9. Reiheneinheit (12) für eine Sämaschine (10) mit einer Dosiereinheit (24) nach einem der vorhergehenden Ansprüche.
